**Europäisches Patentamt**

**European Patent Office**

**Office européen des brevets**

(19)

(11) Veröffentlichungsnummer: **0 189 025**
**B1**

# EUROPÄISCHE PATENTSCHRIFT

(12)

(45) Veröffentlichungstag der Patentschrift:
02.11.88

(51) Int. Cl.⁴: **C 12 C 13/04**

(21) Anmeldenummer: **86100011.5**

(22) Anmeldetag: **02.01.86**

(54) Behälter für die Kochung von Maische oder Würze.

(30) Priorität: **21.01.85 DE 3501805**

(43) Veröffentlichungstag der Anmeldung:
**30.07.86 Patentblatt 86/31**

(45) Bekanntmachung des Hinweises auf die Patenterteilung:
**02.11.88 Patentblatt 88/44**

(84) Benannte Vertragsstaaten:
**BE DE FR GB NL**

(56) Entgegenhaltungen:
**EP-A-0 058 877**
**WO-A-84/03101**
**DE-C-3 226 310**

(73) Patentinhaber: **Anton Steinecker Maschinenfabrik GmbH, Münchenerstrasse 18, D-8050 Freising (DE)**

(72) Erfinder: **Widhopf, Martin, Amselweg 8, D-8050 Freising- Pulling (DE)**

(74) Vertreter: **Patentanwälte Grünecker, Kinkeldey, Stockmair & Partner, Maximilianstrasse 58, D-8000 München 22 (DE)**

### Beschreibung

Die Erfindung betrifft einen Behälter für die Kochung von Maische oder Würze, mit einer Trennwand im Inneren, die den Behälter in einen Wärmetauscherbereich und einen Abscheidebereich unterteilt, und mit wendelförmigen Rohrleitungen im Wärmetauscherbereich.

Aus der DE-OS-3 303 671 ist es bereits bekannt, Behälter, wie sie zur Kochung von Würze und Maische verwendet werden, mit einer Trennwand zu unterteilen, so daß ein Wärmetauscherbereich und ein Abscheidebereich entsteht. Die zu erwärmende Würze strömt durch Rohrleitungen, die im Wärmetauscherbereich angeordnet sind und wird dabei durch Wärmeabgabe eines die Rohrleitungen umströmenden Mediums erwärmt.

In Anlagen zur kontinuierlichen Würzekochung werden mehrere solcher Behälter hintereinander geschaltet, so daß die im Wärmetauscherbereich eines ersten Behälters vorgewärmte Würze, die diesen ersten Behälter über einen Auslaß verläßt, einem identisch aufgebauten zweiten Behälter zugeführt wird und dort ebenfalls wieder die Ringleitungen umläuft, um schließlich auf die erforderliche Temperatur gebracht zu werden.

Nach dem Aufkochen der Würze in den Wärmetauscherbereichen der einzelnen Behälter wird sie den ebenfalls in Serie miteinander verbundenen Abscheidebereichen der einzelnen Behälter zugeführt und entspannt sich dort schrittweise auf atmosphärischen Druck, wobei sich ihre Temperatur erniedrigt. Bei dieser Entspannung fallen Brüden an, die bei derartigen Behältern, die Wärmetauscher und Abscheider kombinieren, als Heizmedium im Wärmetauscherbereich verwendet werden können.

Der aus der DE-OS-3 303 671 bekannte Behälter ist so mit der Trennwand unterteilt, daß der Wärmetauscherbereich etwa in der oberen Hälfte des Behälters liegt, während der Abscheidebereich in der unteren Hälfte des Behälters vorgesehen ist.

Ein gewisser Nachteil des bekannten Behälters ist, daß er relativ hoch baut, weil Abscheider und Wärmetauscher getrennt voneinander, übereinander angeordnet sind. Damit die Gesamthöhe des Behälters nicht noch größer wird, ist es außerdem erforderlich, die Rohrleitungen in mehreren Wendeln verlaufen zu lassen, so daß eine ausreichende Wärmetauscherfläche zur Verfügung steht. Dabei ist dann auch der Strömungswiderstand in den Rohrleitungen relativ groß.

Der Erfindung liegt daher die Aufgabe zugrunde, einen Behälter zu schaffen, der bei geringerer Bauhöhe als der bekannte Behälter in einer Baueinheit einen Wärmetauscher und einen Abscheider umfaßt.

Erfindungsgemäß wird diese Aufgabe dadurch gelöst, daß die wendelförmigen Rohrleitungen im wesentlichen über die ganze Höhe des Behälters im äußeren Umfangsbereich des Behälterinnenraums umlaufend angeordnet sind und daß die Trennwand als sich koaxial im wesentlichen über die Gesamthöhe der Rohrleitungen erstreckende und sich an die Rohrleitungen nach innen anschließende Trennwand ausgebildet ist, so daß der Behälterinnenraum in einen inneren Abscheidebereich und einen darum herum angeordneten äußeren Wärmetauscherbereich unterteilt ist.

Erfindungsgemäß ist also die Trennwand so angeordnet, daß der Behälter im Inneren in einen äußeren Wärmetauscherbereich und einen inneren Abscheidebereich unterteilt ist, d. h., der Abscheidebereich liegt in dem Raum, der von den wendelförmigen Rohrleitungen umspannt wird. Wärmetauscher und Abscheidebereich liegen daher nicht mehr, wie bei der bekannten Bauart, übereinander, sondern ineinander. Dies ermöglicht es, daß sich die Rohrleitungen im wesentlichen über die gesamte Höhe des Behälters erstrecken können, so daß auch schon bei einer relativ geringen Bauhöhe des Behälters, verglichen mit der des bekannten Behälters, die benötigte Wärmetauscherfläche erreicht wird. Desweiteren stellt sich dadurch der Vorteil ein, daß pro Volumeneinheit des Behälters weniger Wendeln vorgesehen sein müssen. Dies führt zu einem geringeren Strömungswiderstand für die die Rohrleitungen durchströmende Würze. Da die Rohrleitungen nicht sehr gedrängt angeordnet sein müssen, ergibt sich der weitere Vorteil, daß der Behälterinnenraum auch im Wärmetauscherabschnitt einfach zu reinigen ist.

Eine vorteilhafte Ausführungsform der Erfindung sieht vor, daß der Behälter die Form eines mit einem Deckel und einem Boden abgeschlossenen, länglichen, stehenden Zylinders hat und daß die Trennwand ein koaxialer, nach oben offener und den Abschneideraum begrenzender Innenzylinder ist. Der Behälter erhält durch diese Maßnahme insgesamt einen sehr einfachen Aufbau und läßt sich leicht herstellen. Den Zylinder nach oben offen zu gestalten bringt den Vorteil mit sich, daß die Brüden, die im Abscheideraum bei der Entspannung der Würze entstehen, über eine große Öffnung nach oben aus dem Abscheideraum entweichen und in den Wärmetauscherbereich gelangen können.

In weiterer vorteilhafter Ausgestaltung der Erfindung ist vorgesehen, daß der Innenzylinder einen bombierten Boden aufweist, in den ein durch den ebenfalls bombierten Behälterboden geführter Auslaß mündet. Der bombierte Boden erleichtert das Austreten der Würze aus dem Abscheidebereich durch den Auslaß. Andererseits erleichtert der bombierte Behälterboden eine erleichterte und zuverlässige Kondensatabfuhr im Wärmetauscherbereich, so daß der Wärmetauscher nicht durch sich am Boden ablagerndes Kondensat verunreinigt wird. Er muß daher auch in seinem Bodenbereich nicht häufig gereinigt werden.

Eine weitere Ausgestaltung der Erfindung sieht vor, daß in den Abscheideraum eine Zufuhrleitung für das abzuscheidende Medium geführt ist, die eine tangential zur Innenfläche des Innenzylinders weisende Mündung aufweist. Die Würze strömt gemäß dieser Maßnahme tangential zum Innenzylinder in den Abscheidebereich ein und kann sich dabei wirkungsvoll entspannen, wobei ein optimaler Ausdampfeffekt eintritt.

Eine zweckmäßige Ausführungsform sieht vor, am Boden des Behälters eine Zufuhrleitung und in den Deckel des Behälters eine Abfuhrleitung für das die Rohrleitungen durchströmende Medium vorzusehen. Die Rohrleitungen sind auch in dem Fall, in dem mehrere Wendeln verwendet werden, gemeinsam an die Zufuhrleitung bzw. die Abfuhrleitung angeschlossen.

Bevorzugt sind in dem Wärmetauscherbereich zwei zueinander koaxial angeordnete Rohrleitungen vorgesehen. Da im wesentlichen die gesamte Höhe des Behälters für die Wendeln zur Verfügung steht, reichen nur zwei Rohrleitungen aus, um die erforderliche Wärmetauscherfläche bereitzustellen.

Die Erfindung wird im folgenden anhand eines in der Zeichnung dargestellten Ausführungsbeispiels weiter erläutert und beschrieben.

Figur 1 zeigt einen neuerungsgemäßen Behälter in einer schematischen Längsschnittdarstellung und

Figur 2 mehrere nuerungsgemäße Behälter, die zur einer Anlage für die Kochung von Würze miteinander verbunden sind.

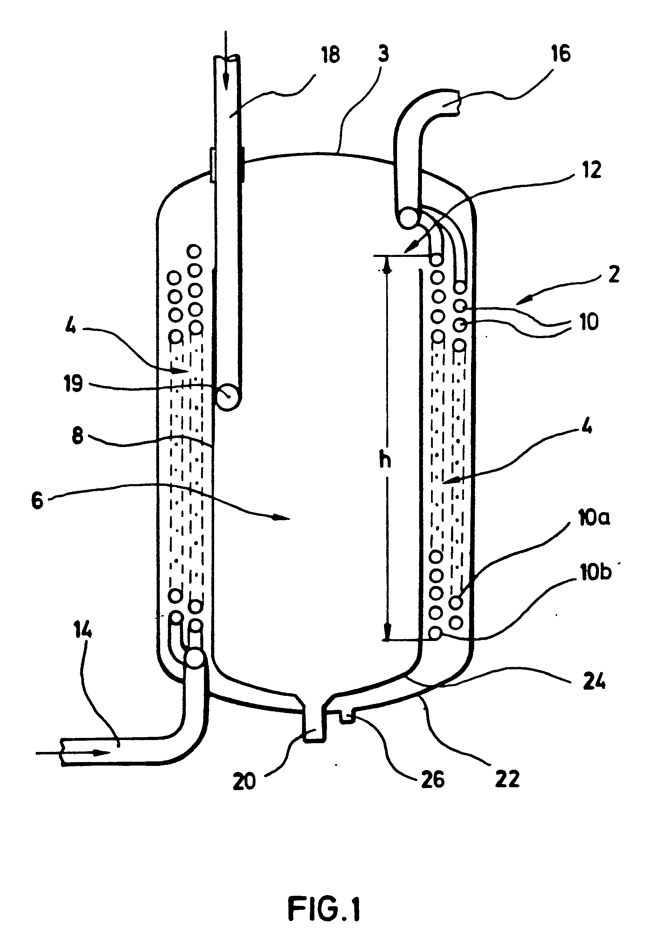

In Figur 1 ist im Ganzen mit 2 ein erfindungsgemäßer Behälter bezeichnet, der für die Kochung von Maische oder Würze geeignet ist. Der Behälter 2 besitzt die Form eines zylindrischen, langgestreckten Körpers und ist nach oben durch einen Deckel 3 und nach unten durch einen Boden 22 verschlossen. Im Innenraum 12 ist der Behälter 2 durch einen konzentrisch zur Behälteraußenwand verlaufenden Innenzylinder 8 in einem Wärmetauscherbereich 4 und einen Abscheidebereich 6 unterteilt. Dieser Innenzylinder 8 stellt somit eine Trennwand zwischen Wärmetauscherbereich 4 und Abscheidebereich 6 dar. Der Innenzylinder ist nach oben in Richtung zum Deckel 3 des Behälters 2 hin offen und nach unten durch einen bombierten Boden 24 abgeschlossen, so daß zum Wärmetauscherbereich 4 hin nur eine Verbindung über die obere Öffnung des Innenzylinders 8 besteht.

Im Wärmetauscherbereich sind wendelförmige Rohrleitungen 10 angeordnet, die aus einer innenliegenden Wendel 10b und einer äußeren Wendel 10a bestehen. Die Rohrleitungen verlaufen konzentrisch um den Innenzylinder 8 herum.

Durch den Boden 22 des Behälters 2 hindurch führt eine Zufuhrleitung 14, durch die die im Wärmetauscher zu erwärmende Würze den Rohrleitungen 10 zugeführt wird. Am oberen Ende des Behälters ist durch den Deckel 3 eine Abführleitung 16 geführt, über die die in den Rohrleitungen erwärmte Würze abgeführt wird. Durch den Deckel 3 des Behälters 2 hindurch verläuft weiterhin eine Zuführleitung 18, die in dem von dem Zylinder 8 umgrenzten Abscheideraum 6 eine Mündung 19 besitzt, welche tangential zur Behälterwand (senkrecht zur Zeichnungsebene) gerichtet ist. Die über die Zuführleitung 18 eingeleitete Würze expandiert nach dem Austritt aus der Mündung 19.

Über den am bombierten Boden 24 vorgesehenen Auslaß 20 kann die entspannte Würze dann entnommen werden.

Wie zu erkennen ist, erstrecken sich die Rohrleitungen 10 im wesentlichen über die gesamte Höhe des Behälters 2. Der Innenzylinder 8 seinerseits erstreckt die gesamte Höhe h der Rohrleitungen. Auf diese Art und Weise steht dem Wärmetauscherbereich 4 im wesentlichen die volle Höhe des Behälters 2 zur Verfügung, so daß schon bei relativ geringer Bauhöhe des Behälters 2 ein ausreichend guter Wärmetauscherwirkungsgrad erreicht wird. Die einzelnen Wendeln sind nicht sehr dicht aneinander angeordnet, so daß sie vom Wärmetauschermedium allseits umspült werden können. Die Brüden, die bei der Expansion der Würze im Abscheideraum 6 entstehen, bilden dabei das Wärmetauschermedium.

Das im Wärmetauscherbereich 4 entstehende Kondensat wird über dem bombierten Boden 22 des Behälters 2 und über die Abflußöffnung 26 zuverlässig abgeführt.

Es ist zu erkennen, daß der erfindungsgemäße Behälter einen äußerst einfachen Aufbau hat, was die Herstellung billig macht. Aufgrund des einfachen Aufbaus läßt sich der Behälterinnenraum auch einfacher reinigen.

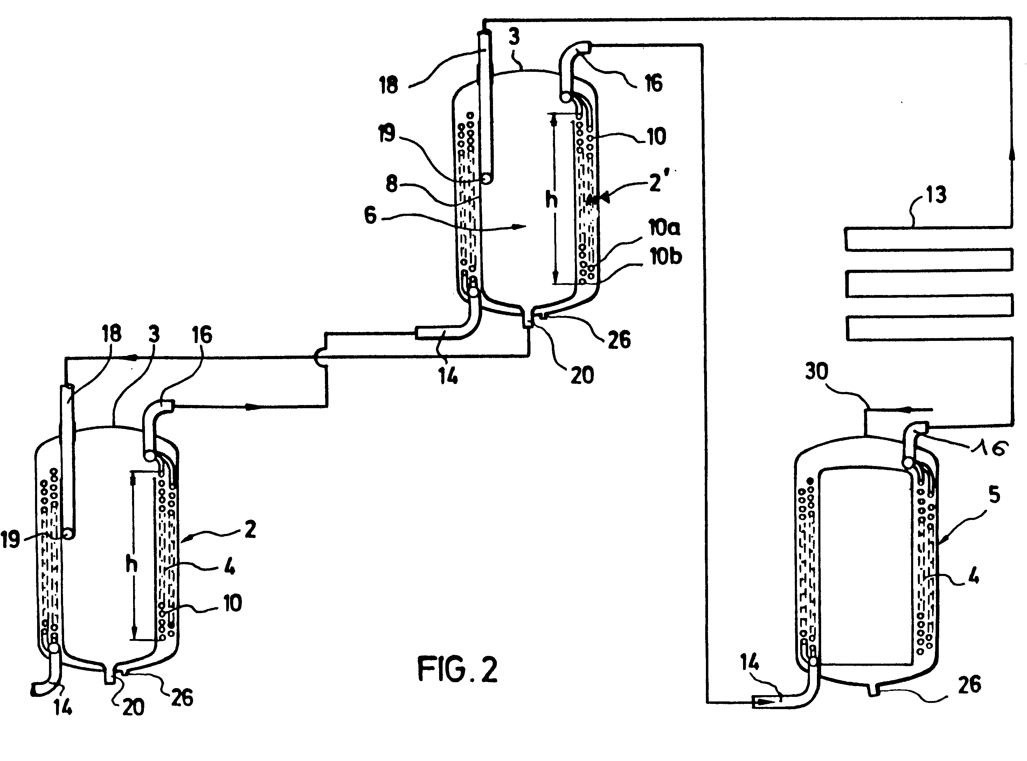

In Figur 2 ist dargestellt, wie sich die erfindungsgemäßen Behälter zum Aufbau einer Anlage zum kontinuierlichen Würzekochen mit stufenweiser Erwärmung der Würze kombinieren läßt. Die dort gezeigten Behälter 2 und 2' sind identisch wie der Behälter 2, der in Figur 1 dargestellt ist, aufgebaut. Der dritte dargestellte Behälter 5 unterscheidet sich von den Behältern 2 und 2' dadurch, daß der Abscheideraum nicht zum Abscheiden der Würze dient und beinhaltet demnach nur einen Wärmetauscher 4, was im folgenden noch näher erläutert werden wird.

Wie zu erkennen ist, sind die Wärmetauscher der Behälter 12 und 2' hintereinander geschaltet, d. h. die Abführleitung 16 des Wärmetauschers 2 ist an die Zuführungsleitung 14 des Wärmetauschers 2' angeschlossen. Die daher über die Zuführungsleitung 14 des ersten Wärmetauschers 2 zugeführte Würze wird in dem Wärmetauscher 4 des zweiten Behälters 2' weiter erwärmt. Die Abführleitung 16 des zweiten Behälters 2' ist ihrerseits mit der Zuführungsleitung 14 eines ansich bereits bekannten Wärmetauschers 5 verbunden und wird schließlich in diesem dritten Wärmetauscher 5 nach Durchlauf der Rohrleitungen auf ihre Kochtemperatur, beispielsweise etwa 140°C, erwärmt. Die Erwärmung in dem Wärmetauscher 5 geschieht dabei durch Heißdampf, der über einen Zulauf 30 in den Behälter 5 eingelassen wird. Das Kondensat wird am Behälterboden 26 gesammelt und über den Auslaß 26 abgeführt.

Nach dem Austritt der so auf Kochtemperatur erwärmten Würze aus dem Wärmetauscher 5 über den Auslaß 16 durchläuft die Würze eine Heißhaltezone 13, in der der Druck und die Temperatur mittels eines nicht dargestellten Druckhalteventils gehalten werden. In dieser Heißhaltezone erfolgt die Isomerisierung und Koagulation des Eiweiß.

Die Würze gelangt dann über die Zuführungsleitung 18 des Behälters 2' in den Abscheideraum 6 dieses Behälters und entspannt sich dabei teilweise, wobei sich die Temperatur auf beispielsweise etwa 120°C erniedrigt. Bei dieser Entspannung entstehen Brüden, die den Abscheideraum 6 nach oben verlassen und somit das Heizmedium im Wärmetauscherbereich 4 des Behälters 2' bilden.

Die Würze sammelt sich im unteren Bereich des Abscheideraums 6, tritt dort aus dem Auslaß 20 aus und wird der Zuführungsleitung 18 des ersten Behälters 2 zugeführt. Über diese Zuführungsleitung 18 gelangt sie dann in den Abscheideraum 6 des ersten Behälters 2, wo sie auf atmosphärischen Druck entspannt wird. Dabei erniedrigt sich ihre Temperatur auf etwa 100°C. Auch die bei dieser Entspannung anfallenden Brüden steigen in dem Abscheideraum 6 auf und gelangen in den Wärmetauscherbereich 4 des Behälters 2 und bilden so das Heizmedium auch für diesen Wärmetauscher. Am Auslaß 20 des Behälters 2 kann dann die Würze entnommen und weiter verarbeitet werden.

Das sich jeweils in den Wärmetauschern ansammelnde Kondensat wird über die Auslässe 26 der einzelnen Wärmetauscher abgeführt.

### Patentansprüche

1. Behälter für die Kochung von Maische oder Würze, mit einer Trennwand im Inneren, die den Behälter in einen Wärmetauscherbereich und einen Abscheidebereich unterteilt und mit wendelförmigen Rohrleitungen im Wärmetauscherbereich, dadurch gekennzeichnet, daß die wendelförmigen Rohrleitungen (10, 10A, 10B) im wesentlichen über die ganze Höhe des Behälters (2, 2') im äußeren Umfangsbereich des Behälterinnenraumes umlaufend angeordnet sind und daß die Trennwand (8) als sich koaxial im wesentlichen über die Gesamthöhe (h) der Rohrleitungen (10, 10A, 10B) erstreckende und sich an diese nach innen anschließende Trennwand ausgebildet ist, so daß der Behälter (2, 2') in einen inneren Abscheidebereich (6) und einen darum herum angeordneten äußeren Wärmetauscherbereich (4) unterteilt ist.

2. Behälter nach Anspruch 1, dadurch gekennzeichnet, daß der Behälter (2, 2') die Form eines mit einem Deckel (3) und einem Boden (22) abgeschlossenen, länglichen stehenden Zylinders hat und daß die Trennwand ein koaxialer, nach oben offener und den Abscheideraum (6) begrenzender Innenzylinder (8) ist.

3. Behälter nach Anspruch 2, dadurch gekennzeichnet, daß der Innenzylinder (2) einen bombierten Boden (24) aufweist, in den ein durch den Behälterboden (22) geführter Auslaß (20) mündet.

4. Behälter nach Anspruch 2 oder 3, dadurch gekennzeichnet, daß in den Abscheideraum (6) eine Zuführungsleitung (18) für das abzuscheidende Medium geführt ist, die eine tangential zur Innenfläche des Innenzylinders (8) weisende Mündung (19) aufweist.

5. Behälter nach wenigstens einem der vorangegangenen Ansprüche, dadurch gekennzeichnet, daß am Boden (22) des Behälters (2, 2') eine Zuführungsleitung (14) und im Deckel (3) des Behälters (2, 2') eine Abführleitung (16) für das die Rohrleitungen (10, 10A, 10B) durchströmende Medium vorgesehen ist.

6. Behälter nach wenigstens einem der vorangegangenen Ansprüche, dadurch gekennzeichnet, daß im Wärmetauscherbereich (4) zwei zueinander koaxial angeordnete Rohrleitungen (10A, 10B) vorgesehen sind.

### Claims

1. A container for boiling mash or wort, with a partition in the interior to divide the container into a heat-exchanger zone and a separating zone, and having helical pipelines in the heat-exchanger zone, characterized in that the helical pipelines (10, 10A, 10B) are disposed substantially over the entire height of the container (2, 2') peripherally in the outer peripheral zone of the container interior and the partition (8) extends coaxially over substantially the entire height (h) of the pipelines (10, 10A, 10B) and adjoins the latter in the inward direction so that the container (2, 2') is divided into an inner separating zone (6) and an outer heat-exchanger zone (4) disposed therearound.

2. A container according to claim 1, characterized in that the container (2, 2') is in the form of an elongate upright cylinder closed by a lid (3) and a base (22) and the partition is a coaxial inner cylinder (8) which is open at the top and defines the separating chamber (6).

3. A container according to claim 2, characterized in that the inner cylinder (2) has a curved base (24) into which leads an outlet (20) passing through the container base (22).

4. A container according to claim 2 or 3, characterised in that a feedpipe (18) for the medium for separation is taken into the separating chamber (6) and has an exit (19) pointing tangentially towards the inner surface of the inner cylinder (8).

5. A container according to at least one of the preceding claims, characterized in that a feedpipe (14) is provided at the base (22) of the container (2, 2') and a discharge pipe (16) for the medium flowing through the pipelines (10, 10A, 10B) is provided in the lid (3) of the container (2, 2').

6. A container according to at least one of the preceding claims, characterised in that two pipes (10A, 10B) disposed coaxially of one another are provided in the heat exchanger zone (4).

## Revendications

1. Récipient pour la cuisson de trempe ou de moût, équipé intérieurement d'une cloison, qui divise le récipient en une région d'échange de chaleur et une région de séparation, et de tubes en forme d'hélice ou serpentins dans la région d'échange de chaleur, caractérisé en ce que les serpentins (10, 10A, 10B) sont disposés sensiblement sur toute la hauteur du récipient (2, 2') dans la région périphérique extérieure de l'espace intérieur du récipient de façon à faire le tour de celui-ci et en ce que la cloison (8) est réalisée en tant que paroi de séparation s'étendant coaxialement sensiblement sur toute la hauteur (h) des tubes ou serpentins (10, 10A, 10B) et faisant suite, du côté intérieur, à ceux-ci, de sorte que le récipient (2, 2') se trouve divisé en une région de séparation intérieure (6) et une région d'échange de chaleur extérieure (4) disposée autour de cette dernière.

2. Récipient selon la revendication 1, caractérisé en ce que le récipient (2, 2') présente la forme d'un cylindre dressé oblong fermé par un couvercle (3) et un fond (22) et en ce que la cloison est un cylindre interne coaxial (8) ouvert vers le haut et limitant le compartiment de séparation (6).

3. Récipient selon la revendication 2, caractérisé en ce que le cylindre interne (2) présente un fond bombé (24) dans lequel débouche une sortie (20) passant à travers le fond (22) du récipient.

4. Récipient selon la revendication 2 ou 3, caractérisé en ce que dans le compartiment de séparation (6) mène un conduit d'amenée (18) pour le fluide à séparer, lequel conduit présente une embouchure (19) orientée tangentiellement à la surface intérieure du cylindre interne (8).

5. Récipient selon l'une quelconque des revendications précédentes, caractérisé en ce que dans le fond (22) du récipient (2, 2') est prévu un conduit d'alimentation (14) et dans le couvercle (3) du récipient (2, 2') un conduit d'évacuation (16) pour le fluide s'écoulant par les tubes ou serpentins (10, 10A, 10B).

6. Récipient selon l'une quelconque des revendications précédentes, caractérisé en ce que dans la région d'échange de chaleur (4) sont prévus deux serpentins (10A, 10B) disposés coaxialement l'un à l'autre.

FIG.1

FIG. 2

0 189 025